# EUROPEAN PATENT APPLICATION

(11) **EP 1 112 687 A2**
(43) Date of publication of application: **04.07.2001**
(21) Application number: 00116481.3
(22) Date of filing: 29.07.2000
(51) Int. Cl.: A01N 25/22, A01N 57/16, A01N 57/00, A01N 53/14, A01N 53/08, A01N 53/00

(54) **Insect repellent composition and insect repellent paint composition containing the same**

(30) Priority: 27.12.1999 KR 9962564
(71) Applicant: Chemkor Co., Ltd., Kyunggi-do (KR)
(72) Inventor: Cho, Chang Youn, Anyang, Kyunggi-do (KR)
(74) Representative: Dr. Weitzel & Partner

(57) **Abstract**

An insect repellent composition having an excellent insect repelling effect for a long time and an insect repellent paint composition containing the same are disclosed. The insect repellent composition comprises an insect repellent component, a light absorbing agent functioning a keto-enol tautomerism, a light stabilizer for capturing a radical and a solvent. The light absorbing agent and the light stabilizer contained in the composition can prevent transformation of components in a coating layer, especially insect repellent components by ultraviolet having long and short wavelength. The coating layer manufactured by utilizing the insect repellent paint composition exhibit an excellent insect repellent effect for extended periods of time.

## Description

### Background of the Invention

### 1. Field of the Invention

The present invention relates to an insect repellent composition and an insect repellent paint composition containing the same, and more particularly, to an insect repellent composition which can provide a continuous insect repellent effect for an extended periods of time and an insect repellent paint composition containing the same.

### 2. Description of the Prior Art

Some types of insects such as mosquitos, flies and the like cause a person inconvenience, but do not much harm. On the contrary, lots of insects inhabit the living environment as human beings and cause dirtiness and displeasure. Further, some types of insects disseminate fatal diseases which may take one's life, or consume or destroy crops, which are either grown or stored, such as grain.

Various examples of the damage done by such insects are as follows. Our country imports a great amount of lumber from foreign countries for construction. Powder bark beetles in particular do a great deal of harm to a lauan among the lumber. White ants also are classified as a type of insect which does harm to wood construction. The white ants even destroy valuable cultural assets. Some types of insects work at night and are attracted by automobile headlights which can affect a driver's sight. Sometimes, ants and bark beetles may hinder communication facilities. For repelling the insects which cause various inconvenience and damage, a great deal of effort and costs are expended.

In places that deal with food-stuffs such as restaurants, cattle sheds and groceries, insecticides, repellents and the like have been utilized for the disinfection of areas exposed to insects such as mosquitos, flies and the like. To increase the usability, convenience and efficiency of the object being used, most of the materials used for disinfection are utilized in various processed forms instead of as an undiluted solution type. For example, an emulsion type, a solution type, a sprayer type, a fumigation type, an evaporating type and the like can be exemplified.

Components for extirpating insects such as insecticides, repellents, attractants, chemosterilants and auxiliaries, have diverse functions and strong physiological effects on insects such as mosquitos, flies, etc. They exterminate vermin in order to create a favorable environment for human beings. Among the known insecticidal compositions, widely used examples are as follows.

The insecticide for repelling and eliminating insects such as mosquitos and flies is called an insecticide for disinfection. The stability of the insecticide is a very important factor because most of the components of the insecticide are also toxic to human beings and cattle. Accordingly, it is very important to notice the characteristics of the components of the insecticide.

Insecticide is classified into three classes according to lethal manners. They are insecticide including a contact poison, which extirpates vermin through contact of the poison with an insect, insecticide including a food poison, and a fumigant type insecticide which is lethal to an insect by absorption through a stigma. Insecticide also can be classified into an inorganic and organic type. The inorganic type insecticide includes a sulfur insecticide, a mercury insecticide and the like. The organic type insecticide is further classified into a natural organic type and a synthetic organic type. The natural organic type insecticide includes pyrethrin extracted from the flower of pyrethrum which has an immediate effect on the insects while having low toxicity to human beings and so is widely used. However, the synthetic organic insecticide is commonly utilized because the amount of the natural pyrethrin is limited and is therefore expensive.

The synthetic organic insecticide includes an organic chloride type, an organic phosphorous type, a carbamate type, a pyrethroid type and the like. The organic chloride type insecticide includes DDT (dichloro diphenyl trichloroethane) which has an excellent effect for extended periods of time. However, the utilization of DDT is prohibited because it is toxic to the human body. The organic phosphorous type insecticide includes chloropyrifos which is a good eliminator especially for mosquitos. The carbamate type insecticide has a disadvantage of having a strong toxicity to mammals. The pyrethroid type insecticide includes deltamethrin and permethrin and has a similar chemical structure with that of the component extracted from the pyrethrum. In addition, this type has a low toxicity to mammals and so is recognized as the most appropriate insecticide.

Meantime, as a paint composition for protecting construction, an aqueous paint or an oily paint including enamel are utilized. The paint composition improves the adiabatic characteristic as well as the beauty of the construction. However, the construction is always exposed to insects because the paint composition has no insect repellent effect. That is, the construction of which the interior and exterior coated with the paint composition is exposed to mosquitos, flies and the like which directly or indirectly do harm to the welfare of human beings by damaging the dwellings of human beings or cattle. In addition, the components in the paint composition promotes the reproduction of insects such as mosquitos, flies, roaches, ants and spiders to become a factor in inducing various contagious diseases. Research on acquiring an insecticidal composition having a sufficient insect repellent effect for a long time and on applying the insecticidal composition as a component of a paint composition which can be applied to every construction, has been continued.

Japanese Patent Laid-Open No. Hei 11-35405 discloses an insect repelling paint composition having a good effect and obtained by adding an insecticidal composition along with a plasticizer and terpenoids into an aqueous, emulsion and oily paint composition. This paint composition is particularly effective against flies, roaches, acarus, lice, fleas and the like.

U.S. Pat. No. 5,843,215 discloses insect repellent coatings including natural plant secondary compounds which are not harmful to the environment or human beings, as an insect repellent component. The plant secondary compounds include Cuminaldehyde, Pinene, Limonene, Eucalytol, Perillaldehyde, Linalool, Turmeric oil, Cinnamon oil, a mixture thereof. These compounds function is to repel insects. A paint varnish disclosed in this patent can be advantageously utilized as a package of food-stuffs. Japanese Patent Laid-Open No. Hei 6-65018 discloses an insecticidal paint composition comprising micro-capsules including components extracted from natural plants. A dried material and a package coated with this composition are free from mold.

Japanese Patent Laid-Open No. Hei 5-320014 discloses an insect repellent paint composition which has a stable effect for a long time and is safe. The composition is manufactured by dispersing minute powder of boric acid-type glass from which B₂O₃ is slowly flowed out, into the composition. The flowing out velocity of B₂O₃ can be controlled by the diameter of the powder and the components of the glass.

In addition, Japanese Patent Laid-Open No. Hei 6-32999 discloses an insect repellent paint composition including a resin having a mean molecular weight of 500-50000 as a main component and pyrethroid-type repellent component. Japanese Patent Laid-Open No. Sho 63-108086 discloses an insecticidal resin coating including acrylonitrile and/or methacrylonitrile copolymer resin and an organic phosphorous type insecticide.

Korean Patent Publication No. 95-6942 discloses an insect repellent paint composition manufactured by mixing an insect repellent composition obtained by adsorbing pyrethroid type and organic phosphorous type insecticidal material into an adsorbent of a titanate compound with a paint composition. In this patent, the releasing amount of the effective component is controlled by adsorbing into the adsorbent in order to obtain the insect repellent effect for extended periods of time.

As described above, various methods have been developed for exterminating insects such as mosquitos, flies, roaches and ants through adding the insect repellent components into the paint composition.

However, the insect repellent components included in the conventional paint compositions are liable to be lost through evaporation or decomposition when exposed to nature. Accordingly, the insect repellent efficiency is not maintained for extended periods of time and is eliminated in a relatively short time. Particularly, because most of the organic phosphorous type and pyrethroid type insects are ester compounds, they are not stable and are easily hydrolyzed. In addition, when they are exposed to the exterior, the raw materials lose their function in a short time by the natural environment of ultraviolet, heat, wind, etc. which weakens the insect repellent efficiency.

### Summary of the Invention

Accordingly, it is an object of the present invention to provide an insect repellent composition which is stable to the natural environment of ultraviolet, heat, wind, etc., and which has an excellent insect repellent efficiency which can be maintained for extended periods of time.

Another object of the present invention is to provide an insect repellent paint composition containing the above-described insect repellent composition, which has an excellent insect repellent efficiency for a long time, and a good water resistance, alkali resistance and weather resistance.

To accomplish the object, there is provided in the present invention an insect repellent composition comprising an insect repellent component, a light absorbing agent functioning a keto-enol tautomerism, a light stabilizer for capturing a radical and a solvent.

Another object of the present invention is accomplished by an insect repellent paint composition comprising an insect repellent composition comprising an insect repellent component, a light absorbing agent functioning a keto-enol tautomerism, a light stabilizer for capturing a radical and a solvent, a resin, a pigment and an additive.

The paint composition can be an aqueous type or an oil type. When the paint composition is the aqueous type, the preferred resin is an acrylic emulsion type while the paint composition is the oil type, the preferred resin is medium-chained oily alkyd resin, long-chained oily alkyd resin or one-liquid type urethane varnish.

In the present invention, the insect repellent composition can be prepared in two types appropriate for the aqueous paint composition and the oily paint composition so as to advantageously apply it to the two paint compositions. In addition, the insect repellent composition includes specific components for advantageously shielding external impact energy and for maintaining the insect repellent efficiency for a long time. Accordingly, the paint composition including the insect repellent composition has a long lasting insect repellent efficiency.

### Brief Description of the Drawings

The above objects and advantages of the present invention will become more apparent by describing in detail preferred embodiments thereof with reference to the attached drawings in which:
FIG. 1 is illustrated for explaining a reaction principle of a light absorbing agent contained in an insect repellent composition of the present invention;
FIG. 2 is illustrated for explaining energy level differences according to an absorption of light by a light absorbing agent contained in an insect repellent composition of the present invention;
FIGs. 3A & 3B are illustrated for explaining a reaction principle of a light stabilizer contained in an insect repellent composition of the present invention;
FIG. 4 illustrates graphs for showing relations between lethal times of test insects with respect to kinds of insect repellent compositions and dosages thereof; and
FIG. 5 illustrates graphs for showing relations between lethal times of test insects by utilizing insect repellent compositions containing a light absorbing agent and/or a light stabilizer and an insect repellent composition which does not contain either of them.

### Description of the Preferred Embodiment

The present invention will be explained in more detail below, with reference to the attached drawings.

As for the preferred insect repellent components which can be utilized in the insect repellent composition of the present invention, widely known organic phosphorous type and/or pyrethroid type insect repellent components can be utilized. Various other components other than described below can be utilized.

As for the organic phosphorous type insect repellent components, chloropyrifos can be illustrated and as for the pyrethroid type insect repellent components, deltamethrin, allethrin, phenothrin, permethrin, tetramethrin, cypermethrin, cyhalothrin and the like can be exemplified: The components can be added as a single component or as a mixture type. The mixing ratio of the organic phosphorous type and pyrethroid type insect repellent components is preferably in the range of 1 : 0.5-1.5 by weight. The preferred amount of this component is 1-5 % by weight based on the total amount of the insect repellent composition.

When applying the insect repellent composition in a paint composition, the preferred amount of the insect repellent component is in the range of 0.2-0.4% by weight based on the total amount of the paint composition. If the amount of the insect repellent component is below 0.2% by weight, the insect repellent efficiency is not sufficient enough and if the amount is over 0.4% by weight, the increase of the efficiency is too slight. Accordingly, the preferred added amount of the component is in this range.

Among the preferably applied synthetic pyrethroid type insect repellent components, deltamethrin has a chemical structure of 3-(2,2-dibromoethenyl)-2,2-dimethylcyclopropane carboxylic acid-cyano(3-phenoxyphenyl)methyl ester, which is similar to that of pyrethroid extracted from pyrethrum. Deltamethrin supplements demerits of the pyrethrum and exhibits an excellent performance. Particularly, deltamethrin is appropriate for disinfection and domestic use because it is scarcely poisonous to a mammal, that is, a warm-blooded animal, but is deadly poisonous to insects. In addition, deltamethrin has an excellent residual characteristic and so is approved to be an ideal insect repellent component.

As another example of the synthetic pyrethroid type insect repellent components, allethrin having a chemical structure of 2,2-diethyl-3-(2-methyl-1-propenyl)cyclopropane carboxylic acid-2-methyl-4-oxo-3-(2-propenyl-2-cyclopenten-1-yl) ester, phenothrin having a chemical structure of 2,2-dimethyl-3-(2-methyl-1-propenyl)cyclpropane carboxylic acid m-phenoxy benzyl ester, permethrin having a chemical structure of 3-(2,2-dicholroethenyl)-2,2-dimethylcyclopropane carboxylic acid-(3-phenoxypenyl) methyl ester, tetramethrin having a chemical structure of 2,2-dimethyl-3-(2-methyl-1-propenyl)cyclopropane carboxylic acid (1,3,4,5,6,7-hexahydro-1,3-dioxo-2H-isoindol-2-yl) methyl ester, cypermethrin having a chemical structure of 3-(2-dichloroethenyl)-2,2-dimethyl cyclopropane carboxylic acid cyano(3-phenoxyphenyl)methyl ester and cyhalothrin having a chemical structure of 3-(2-cyclo-3,3,3-trifluoro-1-propenyl)-2,2-dimethyl cyclopropane can be exemplified.

As an organic phosphorous type insect repellent component, chloropyrifos having a chemical structure of o,o-diethyl-o-(3,5,6-trichloro-2-pyridyl) phosphorothioate can be illustrated. The stability of chloropyrifos is slightly weaker than that of the organic chlorine type component and the residual characteristic is not so long. However, the nervous tissue of the insects including mosquitos and flies is paralyzed through contact and absorbtion of the component.

As a durable agent for increasing the insect repellent efficiency of the composition of the present invention, a light absorbing agent and a light stabilizer are added. Preferred compounds of these two agents and the reaction principle are as follows.

First, the light absorbing agent absorbs harmful ultraviolet and changes it into thermal energy to prevent a photochemical reaction in a coating layer. Therefore, the deterioration of the lasting effect of the insect repellent component due to a photo-aging of the coating layer can be eliminated.

At least one compound selected from the group consisting of benzotriazole-based compounds, triazine-based compounds, phenone-based compounds and oxalic acid-based compounds, can be preferably utilized as the light absorbing agent. More preferably, a compound containing hydroxyphenyl function or aniline is utilized. Basic chemical structures of the preferred compounds are illustrated below. Structure (1) corresponds to hydroxyphenyl benzotriazole, structure (2) corresponds to hydroxy S-triazine, structure (3) corresponds to hydroxybenzophenone and structure (4) corresponds to oxalic acid anilide.

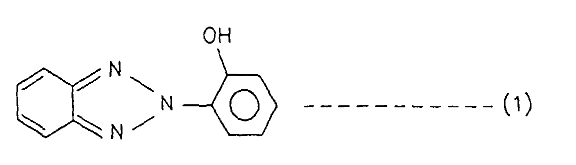

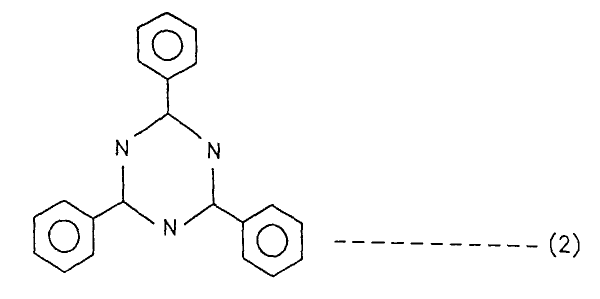

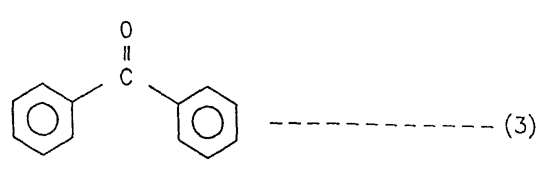

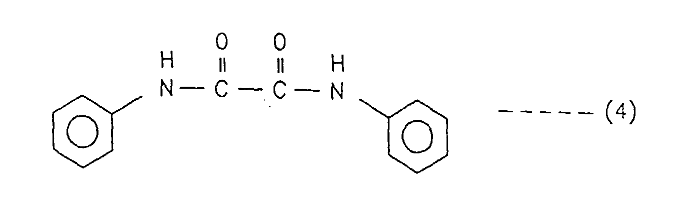

In structures (1), (2) and (3), at least one hydrogen atom in benzene rings can be replaced with an alkyl function.

Chemical structures of more preferred light absorbing agents are 2-(2-hydroxy-3,5-di-tert-amyl)-2H-benzotriazole, 2-[2-hydroxy-3,5-di(1,1-dimethylbenzyl)phenyl]-2H-benzotriazole, methyl-3-[3-(2H-benzotriazole-2-yl)-5-tert-butyl-4-hydroxyphenyl]propionate and the like. These compounds are purchased by CIBA Chemical Co. in the names of Tinuvin 328, Tinuvin 900, Tinuvin 1130, etc., respectively.

The principle of absorbing ultraviolet rays of the light absorbing agent is thought to be based on keto-enol tautomerism. When common paint composition receives energy from an external light source, an electron transition from a stable ground state to an excited state occurs to deteriorate a coating layer. However, in the present invention, the light absorbing agent absorbs the external light energy and emits thermal energy through a conversion of the molecular structure of this agent from an enol state into a keto state. The excited state of the light absorbing agent is converted into the ground state through this emission of thermal energy. By repeating this process, the deterioration of the coating layer by the light can be prevented. Particularly, since the insect repellent components which are liable to be decomposed by the light, are stored stable, the insect repellent efficiency can be prolonged. Further, other components in the coating layer can be stabilized by the light absorbing agent.

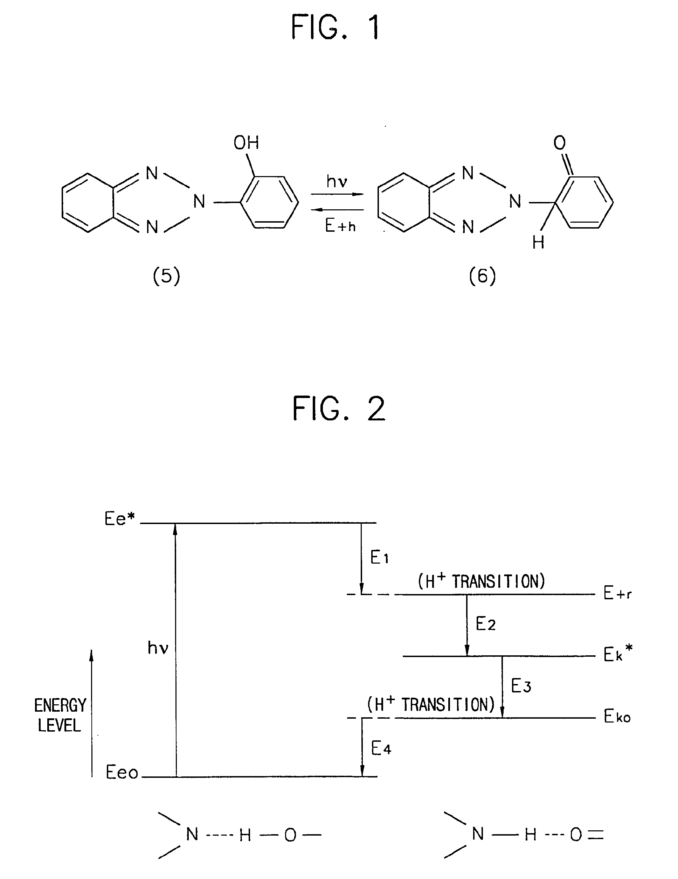

FIG. 1 is illustrated for explaining a reaction principle of a light absorbing agent contained in an insect repellent composition of the present invention. In FIG. 1, 2-(2-hydroxy)-2H-benzotriazole is illustrated as an example of the hydroxybenzotriazole compound which is one of the light absorbing agents. Structure (5) illustrates an enol form and structure (6) illustrates a keto form. This compound is present in the enol form and converted into the keto form through an absorption of ultraviolet energy (hv). Then, the keto form is converted into the enol form through an emission of a thermal energy (Eth).

FIG. 2 is illustrated for explaining energy level differences according to the absorption of light by the light absorbing agent, accompanied by the reaction illustrated in FIG. 1. At the left portion, illustrated are the energy levels of the ground state (Ee₀) and the excited state (Ee^{*}) of a phenol compound which has the enol form compound having structure (5). At the right portion, illustrated are the energy levels of the ground state (Ek₀) and the excited state (Ek^{*}) of a quinone compound which has the keto form compound having structure (6). After the enol compound absorbs ultraviolet (hv) and is converted from the ground state into the excited state thereof, a compound having a transition state which is a meso state of the enol and keto compound and has an energy level of E₁, is obtained. At this state, a hydrogen atom combined with an oxygen atom of alcohol function makes a semi-combined state with a neighboring nitrogen atom. Then, the compound of this transition state emits energy E₂ to reach the excited state of the keto compound. The excited state of the keto compound is converted into the ground state thereof through an emission of energy E₃. The keto compound is converted into the more stable enol compound accompanying an emission of energy E₄ and a transition of the hydrogen atom. In conclusion, the absorbed ultraviolet energy is emitted step by step by thermal energies of E₁, E₂, E₃ and E₄ without affecting the insect repellent components.

As another durable agent, the light stabilizer is added into the insect repellent composition. The preferred light stabilizer is HALS (hindered amine light stabilizer) type compound. More preferably, a compound including piperidyl function is utilized. The HALS compound can produce a relatively stable radical compound. As the piperidyl compound, bis(1,2,2,6,6-pentamethyl-4-piperidyl)sebacate and a reaction product of decanedioic acid, bis(2,2,4,6-tetramethyl-1-(octyloxy)-4-piperidynyl) ester, 1,1-dimethylethylhydroperoxide and octane, can be exemplified. These two compounds are purchased from CIBA Chemical Co., as trade names of Tinuvin 292 and Tinuvin 123.

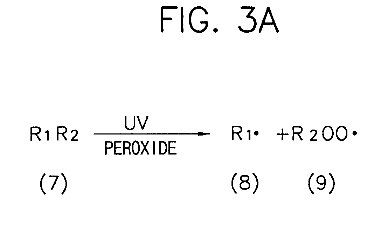

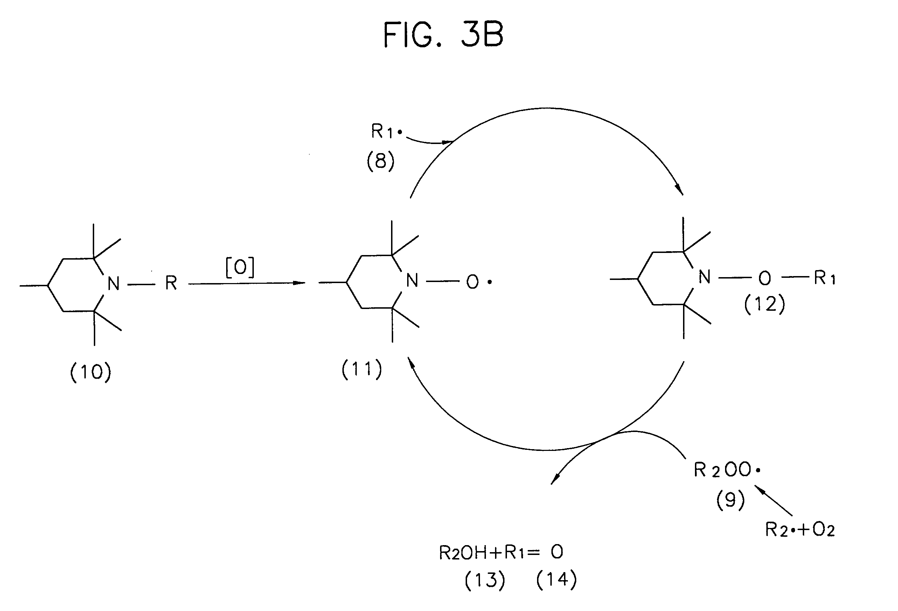

FIGs. 3A & 3B are illustrated for explaining a reaction principle of the light stabilizer contained in the insect repellent composition of the present invention.

Sometimes, natural light having a short wavelength and a high frequency decomposes the constituting components of a coating layer by oxygen in the air to produce free radicals. Thus, produced free radicals immediately cause a chain reaction to decompose and deform the constituting components of the coating layer which deteriorates the layer. However, the addition of the HALS compound can prevent this phenomenon through a coupling of the radical with the HALS compound. The HALS compound illustrated in FIG. 3B includes the piperidyl function and has a chemical structure of (10). Compound 10 produces a relatively stable radical compound thanks to a plurality of neighboring alkyl functions.

For example, a compound having R₁R₂ structure (7) in the coating layer is assumed to be decomposed by ultraviolet and oxygen in the air into free radicals of compounds having structures (8) and (9). The coupling of these free radicals with the HALS compound will be explained with reference to FIG. 3B. Radical compound (11) produced from the HALS compound having the structure (10) makes a coupling reaction with a radical compound of structure (8) to produce a compound having a structure of (12). This compound of structure (12) reacts with remaining unstable free radicals of structure (9) to produce compounds of structure (13) and (14). Then, the compound having structure (12) is converted into the radical of structure (11) again. The HALS compound repeats these reactions as a radical scavenger to remove radicals produced in the coating layer. In the structures, R₁ and R₂ represent a compound including carbon.

As described above, ultraviolet energy having both long and short wavelength can be canceled by the addition of the light absorbing agent and the light stabilizer into the paint composition. Therefore, the characteristic of the paint composition including the insect repellent component and other additives can be maintained for a long time. Particularly, the addition of the light stabilizer along with the light absorbing agent which cannot prevent auto-oxidation of the insect repellent component, further prolongs the insect repellent efficiency.

The preferred mixing ratio of the light absorbing agent and the light stabilizer is in the range of 1 : 0.5-1.5 by weight and the preferred addition amount of these compounds is 5-30% by weight based on the total amount of the insect repellent composition.

When the insect repellent composition is added into the insect repellent paint composition, the addition amount of the light absorbing agent and the light stabilizer is preferably in the range of 1-2% by weight based on the total amount of the paint composition. If the addition amount is below 1 % by weight, the maintaining of the insect repellent efficiency is not satisfactory and if the addition amount is over 2% by weight, the improvement of the efficiency according to the increase of the light absorbing agent and the light stabilizer is insignificant.

In the present invention, the insect repellent composition including the insect repellent component, the light absorbing agent and the light stabilizer can be prepared in advance. The composition can be separately prepared according to the type of the paint composition to be prepared. That is, an aqueous insect repellent composition for an aqueous paint composition and an oily insect repellent composition for an oily paint composition can be separately prepared for the sake of convenience.

The aqueous insect repellent composition can be prepared so as to include the following components and addition amounts as illustrated in Table 1. In order to homogeneously emulsify water-soluble components, a dispersing process into water at a high velocity is required.

**Table 1**

| components | added amount (% by weight) |
|---|---|
| insect repellent component | 2-4 |
| light absorbing agent | 5-10 |
| light stabilizer | 5-10 |
| solvent | 13-28 |
| water | 40-60 |
| surfactant | 8-12 |
| deodorant | 0.5 |
| stabilizer | 0.1 |
| buffer | 0.7 |
| total amount | 100 |

Meantime, oily insect repellent composition can be prepared so as to include the following components and addition amounts as illustrated in Table 2.

**Table 2**

| components | added amount (% by weight) |
|---|---|
| insect repellent component | 2-4 |
| light absorbing agent | 5-10 |
| light stabilizer | 5-10 |
| solvent | 73-93 |
| stabilizer | 0.1 |
| total amount | 100 |

A method for preparing the insect repellent composition according to the present invention will be explained in detail with reference to the following embodiments.

### Example 1

Each component illustrated in Table 3 was purchased from each manufacturing Co. in a given amount. First, deltamethrin, chloropyrifos, KOCOSOL 100 and Triton X-100 were mixed and stirred to obtain a solution. KOCOSOL 100 is known to be a mixture-type solvent extracted during a petroleum distillation process and to include aliphatic hydrocarbons and aromatic hydrocarbons. Triton X-100 has a chemical structure of (15) and a good compatibility and is utilized as a non-ionic surfactant in detergent. Triton X-100 also is utilized as a wetting agent of a pigment and a dispersing agent. In structure (15), R' represents alkyl function, R" represents aryl function and x represents 9 or 10.

R'R"(OCHCH)xOH (15)

In a separate reaction vessel, Tinuvin 1130 as a light absorbing agent, Tinuvin 292 as a light stabilizer, butyrene diglycol and pure water were mixed and stirred in about 500-1000 rpm velocity to obtain a dispersed water solution. This solution was mixed with the remaining components of pine oil, dimethylethanol amine and tri-potassium phosphate and thus obtained mixture was stirred in about 500-1000 rpm velocity to obtain an emulsified aqueous insect repellent composition having no precipitate or coagulant.

For reference, dimethylethanolamine is an additive of an aqueous paint composition, which imparts stability to aqueous acrylic emulsion resin and increases the dispersibility of a pigment. Tri-potassium phosphate is a buffer which is added for maintaining a stable pH in a reaction system. Because the light absorbing agent, the light stabilizer and raw insect repellent components are sensitive to the change of the pH, the addition of the buffer is required.

**Table 3**

| components | added amount (g) | function | manufacturing co. |
|---|---|---|---|
| deltamethrin | 2 | insect repellent component | HOECHST |
| chloropyrifos | 2 | insect repellent component | DOW CHEMICAL |
| KOCOSOL 100 | 6 | solvent | YUKONG |
| Triton X-100 | 10 | surfactant | ROHM & HAAS |
| Tinuvin 1130 | 10 | light absorbing agent | CIBA |
| Tinuvin 292 | 10 | light stabilizer | CIBA |
| butylene diglycol | 9 | solvent | UCC |
| tap water | 49.7 | clean water | - |
| pine oil | 0.5 | deodorant | SANGJIN CHEM |
| dimethyl ethanolamine | 0.1 | stabilizer | BASF |
| tri-potassium phosphate | 0.7 | buffer | ASHLAND |
| total amount | 100 | - | - |

### Example 2

Each component illustrated in Table 4 was purchased from each manufacturing Co. in a given amount. First, deltamethrin, chloropyrifos and KOCOSOL 100 were mixed and stirred to obtain a solution. Tinuvin 1130 and Tinuvin 292 were added to this solution and thus obtained mixture was stirred. Toluene and dimethylethanolamine were added to obtain a transparent and oily insect repellent composition having no precipitate or coagulant.

**Table 4**

| components | added amount (g) | function | manufacturing co. |
|---|---|---|---|
| deltamethrin | 2 | insect repellent component | HOECHST |
| chloropyrifos | 2 | insect repellent component | DOW CHEMICAL |
| KOCOSOL 100 | 5 | solvent | YUKONG |
| Tinuvin 1130 | 10 | light absorbing agent | CIBA |
| Tinuvin 292 | 10 | light stabilizer | CIBA |
| toluene | 70.9 | solvent | YUKONG |
| dimethyl ethanolamine | 0.1 | stabilizer | BASF |
| total amount | 100 | - | - |

Methods for preparing the insect repellent paint compositions containing the above-described insect repellent compositions will be explained in detail below.

An insect repellent paint composition is prepared by adding the above-prepared insect repellent composition, resin, pigment and additives. Commonly applied components can be utilized except the insect repellent composition. However, an acrylic emulsion resin is preferably utilized for the aqueous paint composition, while medium-chained oily alkyd resin, long-chained oily alkyd resin and one-liquid type urethane varnish are preferably utilized for the oily paint composition.

As a pigment, a white pigment such as TiO₂, ZnO, etc., a colored pigment including inorganic and organic pigment such as cinquasia red, chrome yellow and cyanine green, a weight increasing pigment, a sieving pigment such as talc, silica and diatomite and the like can be utilized.

As an additive, a surfactant, a viscosity increasing agent, dispersing agent, defoamer, an inhibitor of a film making, a drier, an antiseptic substance, a fungus inhibitor and the like can be utilized. As the surfactant, MONOPOL OP 019 of which the component is octylphenol ethoxylated polyoxy ethylene glycol, purchased from Dongnam Synthesis, can be utilized. As the viscosity increasing agent, an aqueous type including HEC (hydroxy ethyl cellulose), HMHEC (hydrophobically modified hydroxyethyl cellulose), HASE (hydrophobically modified alkali-soluble emulsion) and HUER (hydrophobically modified ethyleneoxide urethane block copolymer) and an oily type including bentonite-based and poly amide wax based viscosity increasing agent can be exemplified.

As an aqueous dispersing agent, Triton X-100, CF-100 of ROHM & HAAS Co. can be utilized and as an oily dispersing agent, Byk-160 series which has an affinity to the pigment and is a polymer block copolymer and Byk-100 series which has an affinity to the pigment and is a carboxylic acid ester solution, both from Byk-Chemie Co. can be utilized. As an aqueous defoamer, Byk-031, 033, 019, 022, 023, etc. which are defoamed polysiloxane-based compounds can be utilized and as an oily defoamer, Byk-065, 066, 070, etc. which are defoamed polysiloxane-based compounds can be utilized.

A film is formed by two main phenomena of an evaporation of a solvent from the surface of the paint composition and a production of an oxidized layer. In order to prevent the formation of the film during a storage of the paint composition, the two main phenomena should be prevented. To prevent the formation of a film by the evaporation of the solvent from the surface of the composition, a solvent having a high boiling point such as amines and dipentenes are utilized. And the formation of an oxidized layer can be prevented by utilizing an antioxidant such as a ketoxime-based and an oxime-based compound including methyl ethyl ketoxime-based compound and cyclohexanone oxime compound.

As for the drier, organic metal complex such as lead-naphthanate, cobalt-naphthanate, and manganese-naphthanate can be utilized. Other various additives commonly added for various objects can be applied in the present invention without exception.

The preferred embodiments of the preparation of the insect repellent paint compositions are illustrated below.

### Example 3

38 parts by weight of ion exchanged water and 0.18 parts by weight of MONOPOL OP 1019 (purchased from Dongnam Synthetic Co.) as a surfactant were mixed in a kettle and stirred. The mixture was heated to 82°C. 13 parts by weight of ion exchanged water and 0.3 parts by weight of potassium sulfate as an initiator were mixed in a separate vessel to prepare a solution. To this solution, 3 parts by weight of acrylonitrile, 24 parts by weight of styrene monomer, 10 parts by weight of 2-ethylhexyl acrylate and 0.7 parts by weight of methacrylic acid were added to prepare a mixture. Thus obtained mixture was added to the kettle drop by drop for 3 hours and then the reactant was stirred for 30 minutes. After completing the reaction, the reactant was cooled to room temperature (25°C). 0.01 parts by weight of MONOPOL OP 1019 was added to the cooled solution and stirred to prepare an emulsion. Then, the emulsion was neutralized by adding ammonia so that the pH became 8-9. An acryl emulsion resin was prepared.

26 parts by weight of ion exchanged water and 0.3 parts by weight of HEC (hydroxy ethyl cellulose) as a viscosity increasing agent were mixed in a tank mix and stirred to completely dissolve the HEC. 0.7 parts by weight of ethylene glycol, 0.5 parts by weight of Triton X-100 (purchased from ROHM & HAAS) as a dispersing agent, 0.1 parts by weight of Byk-032 (purchased from Byk-Chemie Co.) as a defoamer and 45 parts by weight of silica as a sieving pigment were added to the tank mix and stirred at 1000-2000 rpm to obtain a dispersion of which particle distribution is more than NS 4.

0.15 parts by weight of an antiseptic substance, 0.1 parts by weight of a defoamer, 15 parts by weight of acrylic emulsion resin, 0.5 parts by weight of a fungi inhibitor and 10 parts by weight of the insect repellent composition prepared by Example 1 were added into the tank mix and stirred at 500-1000 rpm to obtain an aqueous insect repellent paint composition.

Thus obtained paint composition was coated onto an interior or exterior concrete of construction, a cement mortar, P. C., plasta, etc. by utilizing a spray, a paint brush or a roller. Insects such as mosquitos, flies, etc. can be exterminated.

### Example 4

23 parts by weight of a fatty acid of a soy bean oil, 15 parts by weight of anhydrous phthalic acid and 12 parts by weight of glycerin were added to a kettle and a condensation reaction was implemented at about 230-240°C. 50 parts by weight of a petroleum solvent was added to dilute the condensed product to obtain a medium-chained oily alkyd resin of which oil chain length was 48.

55 parts by weight of thus obtained alkyd resin, 13 parts by weight of pigments including a white pigment of TiO₂ and other pigments, 0.2 parts by weight of Byk-065 as a defoamer, 0.3 parts by weight of methyl ethyl ketoxime as an inhibitor of film making, 3 parts by weight of an organic metal complex drier and 5 parts by weight of a mineral spirit-type solvent were mixed and stirred at 1000-1500 rpm. During stirring, 10 parts by weight of the oily insect repellent composition prepared by Example 2 was added and the stirring was continued for 1 hour to obtain an enamel paint which is an oily insect repellent paint composition.

Thus obtained paint composition was coated onto an interior or exterior wood and steel of a construction, etc. by utilizing a spray, a paint brush or a roller. Insects such as mosquitos, flies, etc. can be exterminated.

### Example 5

35 parts by weight of a fatty acid of a soy bean oil, 15 parts by weight of anhydrous phthalic acid and 10 parts by weight of pentaerythritol were added to a kettle and a condensation reaction was implemented at about 230-240°C. 40 parts by weight of a petroleum solvent was added to dilute the condensed product to obtain a long-chained oily alkyd resin of which oil chain length was 62.

45 parts by weight of thus obtained alkyd resin, 13 parts by weight of pigments including a white pigment of TiO₂ and other pigments, 0.2 parts by weight of Byk-065 as a defoamer, 0.3 parts by weight of methyl ethyl ketoxime as an inhibitor of film making, 3 parts by weight of an organic metal complex drier and 5 parts by weight of a mineral spirit-type solvent were mixed and stirred at 1000-1500 rpm. During stirring, 10 parts by weight of the oily insect repellent composition prepared by Example 2 was added and the stirring was continued for 1 hour to obtain a ready mixed paint which is an oily insect repellent paint composition.

Thus obtained paint composition was coated onto an interior or exterior wood and steel of a construction, etc. by utilizing a spray, a paint brush or a roller. Insects such as mosquitos, flies, etc. can be eliminated.

### Example 6

35 parts by weight of a drying oil of a linseed oil, 2.2 parts by weight of glycerin and 3.1 parts by weight of pentaerythritol were added into a kettle and heated to about 210-220°C to produce mono glyceride. 33 parts by weight of mineral spirit-type solvent was added for a dilution and 13 parts by weight of toluenediisocyanate was added drop by drop for 3 hours. 0.6 parts by weight of methanol was added to eliminate free isocyanate function and thus obtained product was allowed to stand for about 20 minutes. 2.5 parts by weight of a drier was added to obtain an one-liquid type urethane resin.

75 parts by weight of thus obtained urethane resin, 0.5 parts by weight of zirconium, 0.3 parts by weight of methyl ethyl ketoxide as an inhibitor of film making, 0.6 parts by weight of an organic metal complex drier and 15 parts by weight of a mineral spirit-type solvent were mixed and stirred at about 1000-1500 rpm. During stirring, 10 parts by weight of the oily insect repellent composition prepared by Example 2 was added and the stirring was continued for 1 hour to obtain an one-liquid type urethane varnish which is an oily insect repellent paint composition.

Thus obtained paint composition was coated onto an interior or exterior wood and steel of a construction, a piece of furniture, a wooden door, a wooden doorframe, a floor, etc. by utilizing a sprayer, a paint brush or a roller. Insects such as mosquitos, flies, etc. can be exterminated.

Through the above-described examples, it can be noticed that the insect repellent composition of the present invention can be applied to both aqueous and oily paint composition. Particularly, various types of oily paint compositions such as an enamel, a ready mixed paint, or a varnish can be obtained. And a coating layer manufactured by coating these paint compositions has an excellent insect repellent efficiency.

Comparative Examples 1-5 will be explained in order to select an appropriate insect repellent component, and Comparative Examples 6-8 will be explained in order to confirm the influence of the light absorbing agent and the light stabilizer onto the durability of the insect repellent component.

### Comparative Example 1

An aqueous insect repellent composition was prepared by the same method described in Example 1 except that 2% by weight of chloropyrifos was utilized with the exception of the insect repellent component of deltamethrin, the light absorbing agent of Tinuvin 1130 and the light stabilizer of Tinuvin 292. An aqueous insect repellent paint composition was prepared by utilizing thus obtained aqueous insect repellent composition and by the same method described in Example 3.

### Comparative Example 2

An aqueous insect repellent composition was prepared by the same method described in Example 1 except that 4% by weight of chloropyrifos was utilized with the exception of the insect repellent component of deltamethrin, the light absorbing agent of Tinuvin 1130 and the light stabilizer of Tinuvin 292. An aqueous insect repellent paint composition was prepared by utilizing thus obtained aqueous insect repellent composition and by the same method described in Example 3.

### Comparative Example 3

An aqueous insect repellent composition was prepared by the same method described in Example 1 except that 2 % by weight of deltamethrin was utilized with the exception of the insect repellent component of chloropyrifos, the light absorbing agent of Tinuvin 1130 and the light stabilizer of Tinuvin 292. An aqueous insect repellent paint composition was prepared by utilizing thus obtained aqueous insect repellent composition and by the same method described in Example 3.

### Comparative Example 4

An aqueous insect repellent composition was prepared by the same method described in Example 1 except that 4% by weight of deltamethrin was utilized with the exception of the insect repellent component of chloropyrifos, the light absorbing agent of Tinuvin 1130 and the light stabilizer of Tinuvin 292. An aqueous insect repellent paint composition was prepared by utilizing thus obtained aqueous insect repellent composition and by the same method described in Example 3.

### Comparative Example 5

An aqueous insect repellent composition was prepared by the same method described in Example 1 except that 2% by weight of deltamethrin and 2% by weight of chloropyrifos were utilized with the exception of the light absorbing agent of Tinuvin 1130 and the light stabilizer of Tinuvin 292. An aqueous insect repellent paint composition was prepared by utilizing thus obtained aqueous insect repellent composition and by the same method described in Example 3.

The insect repellent efficiencies of the aqueous paint compositions according to comparative examples 1-5 were tested and the observed result is illustrated in Table 5. The test on the insect repellent efficiency of each paint composition was implemented as follows. On the five inner surfaces of a test box (30 x 30 x 20cm³) except the upper surface, each paint composition was coated twice by utilizing a painting brush. The upper surface was covered with an insect controlling net. 50 German roach adults which have strong propagating powers and are the public test insects were thrown into the box. On the upper and inner portion of the box, butter was applied so that the roaches could not crawl out along the wall. The humidity was controlled to keep 50-70% and larvae, adults, solid feed for culture and 2-4% sugared water were provided. The number of lethal roaches were counted according to the lapse of time after the throwing of the roaches.

Tests on the effect of the insect repellency can be carried out by various manners according to a reference. The insecticidal efficiency is commonly represented by LD₅₀ (median lethal dose) and LC₅₀ (median lethal concentration). These are represented by lethal ratio with respect to the dose and the concentration and illustrated as an S character shaped curve. The lethal ratio is converted into a logarithm of the dose and the concentration and is dotted on a graph. Thus obtained dots are connected to obtain a straight line. This line is called as a regressive straight line of lethal ratio with respect to the dose and the concentration and becomes a reference representing the insecticidal efficiency.

For representing an immediate result, KT₅₀ (median knock-down time) which represents the time when 50% of the roaches exhibit abnormal reaction after applying the insect repellent component, is utilized. Residual characteristic represents the lasting time of the insect repellent efficiency. Flushing out efficiency is represented by FOT₅₀ (median flushing out time) and means the time when roaches in a hiding place start to flush out.

In this test, the number of lethal roaches in the box were counted according to the time. The values illustrated in Table 5 is obtained by accumulating the number of the lethal German roaches.

**Table 5**

| time (hour) | comparative example 1 | comparative example 2 | comparative example 3 | comparative example 4 | comparative example 5 |
|---|---|---|---|---|---|
| 1 | 0 | 0 | 0 | 1 | 1 |
| 2 | 1 | 3 | 4 | 6 | 5 |
| 5 | 3 | 7 | 8 | 12 | 10 |
| 10 | 6 | 10 | 12 | 17 | 15 |
| 20 | 10 | 17 | 19 | 41 | 37 |
| 30 | 14 | 22 | 25 | 47 | 40 |
| 40 | 16 | 25 | 30 | 50 | 45 |
| 50 | 19 | 28 | 34 | 50 | 48 |
| 60 | 25 | 40 | 39 | 50 | 50 |
| 72 | 30 | 50 | 42 | 50 | 50 |

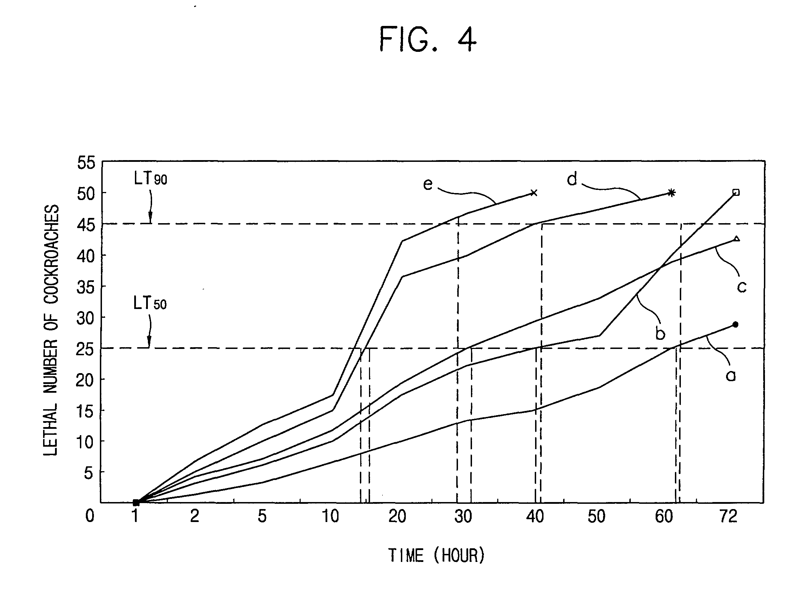

The result in Table 5 is illustrated in FIG. 4 as graphs. In FIG. 4, graph a corresponds to comparative example 1, graph b to comparative example 2, graph c to comparative example 3, graph d to comparative example 4 and graph e to comparative example 5. LT₅₀ and LT₉₀ respectively represent lethal time of 50% of the roaches and 90% of the roaches.

From the result, it can be confirmed that the insect repellent efficiencies of the compositions prepared from comparative example 4 in which deltamethrin was utilized and comparative example 5 in which a mixture of deltamethrin and chloropyrifos was utilized, exhibit a similarly excellent effect. Here, since deltamethrin utilized in comparative example 4 is a very expensive component and the results of the compositions from comparative examples 4 and 5 exhibit similar, the mixture of deltamethrin and chloropyrifos is preferred.

Accordingly, experiments on the durability of the insect repellent efficiency were implemented with or without the light absorbing agent and the light stabilizer when utilizing the mixture of deltamethrin and chloropyrifos as the insect repellent component as follows.

### Comparative Example 6

An aqueous insect repellent composition was prepared by the same method described in Example 1 except that 2% by weight of deltamethrin and 2% by weight of chloropyrifos were utilized with the exception of the light stabilizer of Tinuvin 292. An aqueous insect repellent paint composition was prepared by utilizing thus obtained aqueous insect repellent composition and by the same method described in Example 3.

### Comparative Example 7

An aqueous insect repellent composition was prepared by the same method described in Example 1 except that 2% by weight of deltamethrin and 2% by weight of chloropyrifos were utilized with the exception of the light absorbing agent of Tinuvin 1130. An aqueous insect repellent paint composition was prepared by utilizing thus obtained aqueous insect repellent composition and by the same method described in Example 3.

The tests on the insect repellent efficiencies of the insect repellent paint compositions prepared from comparative example 5 with the exception of the light absorbing agent of Tinuvin 1130 and the light stabilizer of Tinuvin 292, comparative example 6 with the exception of the light stabilizer of Tinuvin 292, comparative example 7 with the exception of the light absorbing agent of Tinuvin 1130 and example 3 with the light absorbing agent of Tinuvin 1130 and the light stabilizer of Tinuvin 292, were implemented after exposing them to a natural environment.

Each paint composition was coated onto a slate panel and then placed at the exterior of a house to expose it to the natural environment of sunlight, wind and rain, dew, frost, cold and warm, dryness and moisture, etc. The panels were exposed from October 1, 1998 to September 30, 1999. By utilizing the panels, boxes having the same size and shape with that manufactured for testing the insect repellent efficiency of the compositions from comparative examples 1-5, were manufactured. 50 German roach adults were thrown into the box and observed. The result is illustrated in Table 6. The values represent accumulated values of lethal roaches.

**Table 6**

| time (hour) | comparative example 5 | comparative example 6 | comparative example 7 | example 4 |
|---|---|---|---|---|
| 1 | 0 | 0 | 0 | 1 |
| 2 | 3 | 3 | 3 | 4 |
| 5 | 6 | 8 | 9 | 9 |
| 10 | 12 | 13 | 13 | 14 |
| 20 | 20 | 25 | 30 | 35 |
| 30 | 28 | 28 | 35 | 38 |
| 40 | 32 | 32 | 37 | 43 |
| 50 | 34 | 35 | 40 | 45 |
| 60 | 39 | 40 | 43 | 46 |
| 72 | 43 | 42 | 45 | 47 |

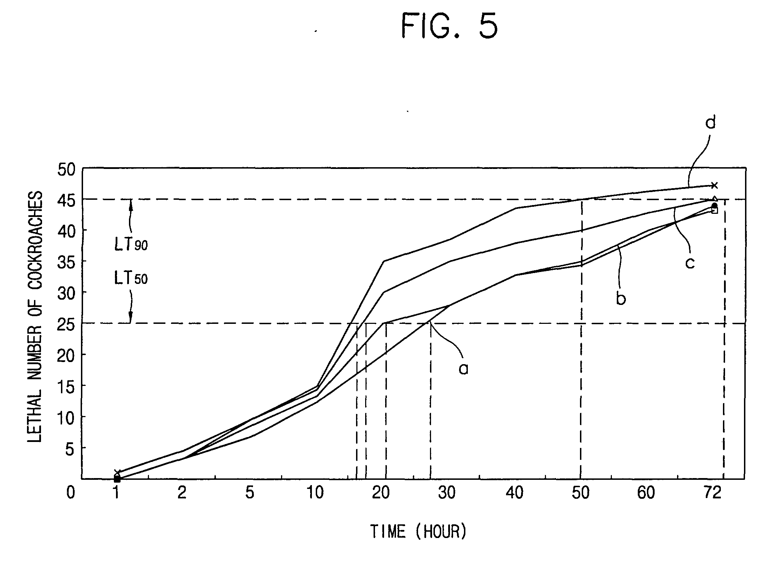

The result in Table 6 is illustrated in FIG. 5 as graphs. In FIG. 5, graph a corresponds to comparative example 5, graph b to comparative example 6, graph c to comparative example 7 and graph d to example 3. LT₅₀ and LT₉₀ respectively represent the lethal time of 50% and 90% roaches.

From the result, it can be confirmed that the most efficient result can be obtained with the composition prepared in example 3 in which both the light absorbing agent and the light stabilizer are contained.

According to an experiment by the present inventors, it was confirmed that the insect repellent efficiency of the paint composition of the present invention can be maintained for about 2 years. Commonly, a coating for a construction is implemented about once every 2-3 years. Therefore, this lasting time is satisfactory. However, when no paint coating is required, only the insect repellent composition of the present invention can be applied on the coating layer.

Because the oily insect repellent composition is transparent, the application of this composition imparts the insect repellent effect while maintaining the originally coated state. Meantime, even though the aqueous insect repellent composition is opaque, the applied state of this composition also is transparent. Accordingly, the application of this composition imparts the insect repellent effect while maintaining the original color of the coated layer.

As described above, since the insect repellent paint composition including the insect repellent composition according to the present invention functions both the paint and insect repellent for a long time, a separate apparatus or treatment for repelling insects is not required for a construction onto which the paint composition is applied.

In addition, the insect repellent composition of the present invention can be separately prepared as an aqueous or oil type and can be applied for an appropriate paint composition. Further, the insect repellent composition can be added as a component of a paint composition and can be independently applied onto a coated layer to impart the insect repellent effect.

While the present invention is described in detail referring to the attached embodiment, various modifications, alternate constructions and equivalents may be employed without departing from the true spirit and scope of the present invention.

## Claims

1. An insect repellent composition comprising an insect repellent component, a light absorbing agent functioning a keto-enol tautomerism, a light stabilizer for capturing a radical and a solvent.

2. An insect repellent composition as claimed in claim 1, wherein said insect repellent component includes one of organic phosphorous type insect repellent component and a pyrethroid type insect repellent component.

3. An insect repellent composition as claimed in claim 2, wherein said organic phosphorous type insect repellent component is chloropyrifos.

4. An insect repellent composition as claimed in claim 2, wherein said pyrethroid type insect repellent component is at least one selected from the group consisting of deltamethrin, allethrin, phenothrin, permethrin, tetramethrin, cypermethrin and cyhalothrin.

5. An insect repellent composition as claimed in claim 2, wherein said insect repellent component is prepared by mixing said organic phosphorous type insect repellent component and said pyrethroid type insect repellent component in a mixing ratio of 1 :
0.5-1.5 by weight.

6. An insect repellent composition as claimed in claim 1, wherein 1-5 % by weight of said insect repellent component is included based on the total amount of said insect repellent composition.

7. An insect repellent composition as claimed in claim 1, wherein said light absorbing agent is at least one compound selected from the group consisting of benzotriazole-based compound, triazine-based compound, phenone-based compound and oxalic acid-based compound.

8. An insect repellent composition as claimed in claim 7, wherein said light absorbing agent further comprises hydroxyphenyl function or aniline function.

9. An insect repellent composition as claimed in claim 7, wherein said light absorbing agent is at least one compound selected from the group consisting of 2-(2-hydroxy-3,5-di-tert-amyl)-2H-benzotriazole, 2-[2-hydroxy-3,5-di(1,1-dimethyl benzyl)phenyl]-2H-benzotriazole and methyl-3-[3-(2H-benzotriazole-2-yl)-5-tert-butyl-4-hydroxyphenyl]propionate.

10. An insect repellent composition as claimed in claim 1, wherein said light stabilizer is HALS (hindered amine light stabilizer).

11. An insect repellent composition as claimed in claim 10, wherein said light stabilizer includes piperidyl function.

12. An insect repellent composition as claimed in claim 10, wherein said light stabilizer is at least one compound selected from the group consisting of i) bis(1,2,2,6,6-pentamethyl-4-piperidyl) cebacate and ii) a reaction product of decanedionic acid, bis(2,2,4,6-tetramethyl-1-(octyloxy)-4-piperidinyl) ester, 1,1-dimethylethylhydroperoxide and octane.

13. An insect repellent composition as claimed in claim 1, wherein an added amount of said light absorbing agent and said light stabilizer is 5-30% by weight based on said insect repellent composition.

14. An insect repellent composition as claimed in claim 1, wherein a mixing ratio of said light absorbing agent and said light stabilizer is in a range of 1 : 0.5-1.5 by weight.

15. An insect repellent composition as claimed in claim 1, further comprising one of a surfactant, a dispersing agent, a stabilizer, a deodorant, a buffer or water.

16. An insect repellent paint composition comprising an insect repellent composition comprising an insect repellent component, a light absorbing agent functioning a keto-enol tautomerism, a light stabilizer for capturing a radical and a solvent, a resin, a pigment and an additive.

17. An insect repellent paint composition as claimed in claim 16, wherein said resin is acrylic emulsion type resin, medium-chained oily alkyd resin, long-chained oily alkyd resin or one-liquid type urethane varnish.

18. An insect repellent paint composition as claimed in claim 16, wherein an amount of said insect repellent component is 0.2-0.4% by weight based on said insect repellent paint composition.

19. An insect repellent paint composition as claimed in claim 16, wherein said insect repellent component includes one of organic phosphorous type insect repellent component and a pyrethroid type insect repellent component.

20. An insect repellent paint composition as claimed in claim 16, wherein an amount of said light absorbing agent and said light stabilizer is in a range of 1-2% by weight based on the total amount of said insect repellent paint composition.

21. An insect repellent paint composition as claimed in claim 16, wherein said light absorbing agent is at least one compound selected from the group consisting of benzotriazole-based compound, triazine-based compound, phenone-based compound and oxalic acid-based compound.

22. An insect repellent paint composition as claimed in claim 21, wherein said light absorbing agent further comprises hydroxyphenyl function or aniline function.

23. An insect repellent paint composition as claimed in claim 21, wherein said light absorbing agent is at least one compound selected from the group consisting of 2-(2-hydroxy-3,5-di-tert-amyl)-2H-benzotriazole, 2-[2-hydroxy-3,5-di(1,1-dimethyl benzyl)phenyl]-2H-benzotriazole and methyl-3-[3-(2H-benzotriazole-2-yl)-5-tert-butyl-4-hydroxyphenyl]propionate.

24. An insect repellent paint composition as claimed in claim 16, wherein said light stabilizer is HALS (hindered amine light stabilizer).

25. An insect repellent paint composition as claimed in claim 16, wherein said light stabilizer includes piperidyl function.

26. An insect repellent paint composition as claimed in claim 16, wherein said light stabilizer is at least one compound selected from the group consisting of i) bis(1,2,2,6,6-pentamethyl-4-piperidyl) cebacate and ii) a reaction product of decanedionic acid, bis(2,2,4,6-tetramethyl-1-(octyloxy)-4-piperidinyl) ester, 1,1-dimethylethylhydroperoxide and octane.
